# EUROPEAN PATENT APPLICATION

(11) **EP 4 645 542 A1**
(43) Date of publication of application: **05.11.2025**
(21) Application number: 23911871.4
(22) Date of filing: 20.12.2023
(51) Int. Cl.: H01M 50/204, H01M 10/613, H01M 10/647, H01M 10/6556, H01M 10/6561, H01M 10/6567, H01M 50/209, H01M 50/211, H01M 50/262, H01M 50/264, H01M 50/35, H01M 50/358, H01M 50/50, H01M 50/505, H01M 50/524, H01M 50/526, H01M 50/588, H01M 50/591

(54) **RESIN BATTERY MODULE**

(30) Priority: 28.12.2022 JP 2022212354
(71) Applicant: Sumitomo Bakelite Co.Ltd., Shinagawa-ku Tokyo 140-0002 (JP); Sumitomo Bakelite Europe (Ghent) NV, 9000 Gent (BE)
(72) Inventor: KOIZUMI Koji, Tokyo 140-0002 (JP); INOKUCHI Hideaki, Tokyo 140-0002 (JP); DEKEYSER Arne, 9000 Gent (BE); DE KEYSER Hendrik, 9000 Gent (BE); LIEBERTSEDER Johannes, 80686 München (DE); JOHN Leonard, 80686 München (DE)
(74) Representative: Ter Meer Steinmeister & Partner
(86) International application number: PCT/JP2023/045615
(87) International publication number: WO 2024/143091

(57) **Abstract**

A resin battery module according to the present invention includes: a plurality of pouch type or prismatic type battery cells including a battery cell terminal; a circuit board; a bus bar that is electrically connected to the battery cell terminal of each of the plurality of battery cells and the circuit board; a fire-resistant plate that is disposed between at least one set of adjacent battery cells among a plurality of battery cells arranged in one direction; a pair of end plates that are provided on both end sides of the plurality of battery cells arranged in one direction, respectively; and a pair of side plates that are coupled with the pair of end plates to form a surrounding structure accommodating the plurality of battery cells, in which at least one of the fire-resistant plate and the pair of end plates is formed of a cured product of a thermosetting resin composition.

## Description

### TECHNICAL FIELD

The present invention relates to a resin battery module.

### BACKGROUND ART

Until now, various developments in a battery module have been made. As such a technique, for example, a technique described in Patent Document 1 is known. Patent Document 1 describes a battery module including: a cell stack defined by a plurality of battery cells stacked on each other, each of the battery cells including a positive electrode lead, a negative electrode lead, and at least one of a sensing negative electrode lead and a sensing positive electrode lead; a bus bar assembly including a plurality of connection bus bars electrically connected to one of the positive and negative electrode leads, a plurality of sensing bus bars electrically connected to the sensing negative electrode lead or the sensing positive electrode lead, and a plurality of bus bar frames including a connection accommodating portion for receiving one of connection bus bars and a sensing accommodating portion for receiving one of sensing bus bars; and a sensing assembly including a circuit board and a sensing frame mounted on a front surface of the bus bar assembly and receiving the circuit board therein in a board embedding portion, the circuit board being electrically connected to the connection bus bars and the sensing bus bars (for example, abstract of Patent Document 1).

### RELATED DOCUMENT

### PATENT DOCUMENT

[Patent Document 1] Published Japanese Translation No. 2020-523766 of the PCT International Publication for Patent Applications

### SUMMARY OF THE INVENTION

### TECHNICAL PROBLEM

However, as a result of investigation by the present inventors, it was found that there is room for improvement from the viewpoints of heat resistance and thermal insulation in battery module described in Patent Document 1.

### SOLUTION TO PROBLEM

As a result of further investigation, the present inventors found that, by forming, using a cured product of a thermosetting resin composition, at least one of a fire-resistant plate that is disposed between one set of adjacent battery cells and a pair of end plates that are provided on both end sides of a plurality of battery cells arranged in one direction, respectively, heat resistance of a resin battery module is further improved as compared to a thermoplastic resin plate, and thermal insulation is improved as compared to a metal plate, thereby completing the present invention.

According to one aspect of the present invention, a resin battery module described below is provided.
1. A resin battery module including:
   a plurality of pouch type or prismatic type battery cells including a battery cell terminal;
   a circuit board;
   a bus bar that is electrically connected to the battery cell terminal of each of the plurality of battery cells and the circuit board;
   a fire-resistant plate that is disposed between at least one set of adjacent battery cells among a plurality of battery cells arranged in one direction;
   a pair of end plates that are provided on both end sides of the plurality of battery cells arranged in one direction, respectively; and
   a pair of side plates that are coupled with the pair of end plates to form a surrounding structure accommodating the plurality of battery cells,
   in which at least one of the fire-resistant plate and the pair of end plates is formed of a cured product of a thermosetting resin composition.
2. The resin battery module according to 1, further including:
   a fire-resistant case that forms an accommodation space accommodating at least one of the battery cells,
   in which the fire-resistant case is formed of one or a plurality of fire-resistant plates.
3. The resin battery module according to 1. or 2.,
   in which the thermosetting resin composition includes at least one of a phenol resin, unsaturated polyester, a diallylphthalate resin, and an epoxy resin.
4. The resin battery module according to any one of 1. to 3., further including:
   a connector with a temperature control function,
   in which the connector with a temperature control function includes
   the bus bar,
   a temperature control pipe that performs a temperature control of the bus bar, and
   a resin sealing member that includes at least a filling portion filled between the bus bar and the temperature control pipe.
5. The resin battery module according to 4.,
   in which the resin sealing member is formed of a cured product of an epoxy resin composition.
6. The resin battery module according to 4. or 5.,
   in which at least one of the pair of side plates is a cover plate that covers at least a part of the connector with a temperature control function.
7. The resin battery module according to 6., further including:
   an explosion-proof valve plate that is disposed between the connector with a temperature control function and the cover plate.
8. The resin battery module according to 7.,
   in which at least one of the cover plate and the explosion-proof valve plate is formed of a cured product of a thermosetting resin composition.

### ADVANTAGEOUS EFFECTS OF INVENTION

According to the present invention, a resin battery module having excellent heat resistance and thermal insulation is provided.

### BRIEF DESCRIPTION OF THE DRAWINGS

Fig. 1 is a cross-sectional view schematically illustrating an example of a configuration of a resin battery module according to the present embodiment.
Fig. 2 is a cross-sectional view schematically illustrating an example of a configuration of a stack structure of a plurality of battery cells according to the present embodiment.
Fig. 3 is a cross-sectional view schematically illustrating an example of a configuration of a connector with a temperature control function according to the present embodiment.
Figs. 4A and 4B are perspective views schematically illustrating the example of the configuration of the resin battery module according to the present embodiment.
Figs. 5A and 5B are perspective views schematically illustrating the example of the configuration of the stack structure of the plurality of battery cells according to the present embodiment.
Figs. 6A to 6C are perspective views schematically illustrating the example of the configuration of the connector with a temperature control function according to the present embodiment.
Figs. 7A to 7D are perspective views schematically illustrating an example of a configuration of each of components according to the present embodiment.

### DESCRIPTION OF EMBODIMENTS

Hereinafter, an embodiment of the present invention will be described using the drawings. In all the drawings, the same components will be represented by the same reference numerals, and the description thereof will not be repeated appropriately. In addition, the drawings are schematic diagrams, in which a dimensional ratio does not match the actual one.

A resin battery module according to the present embodiment will be described.

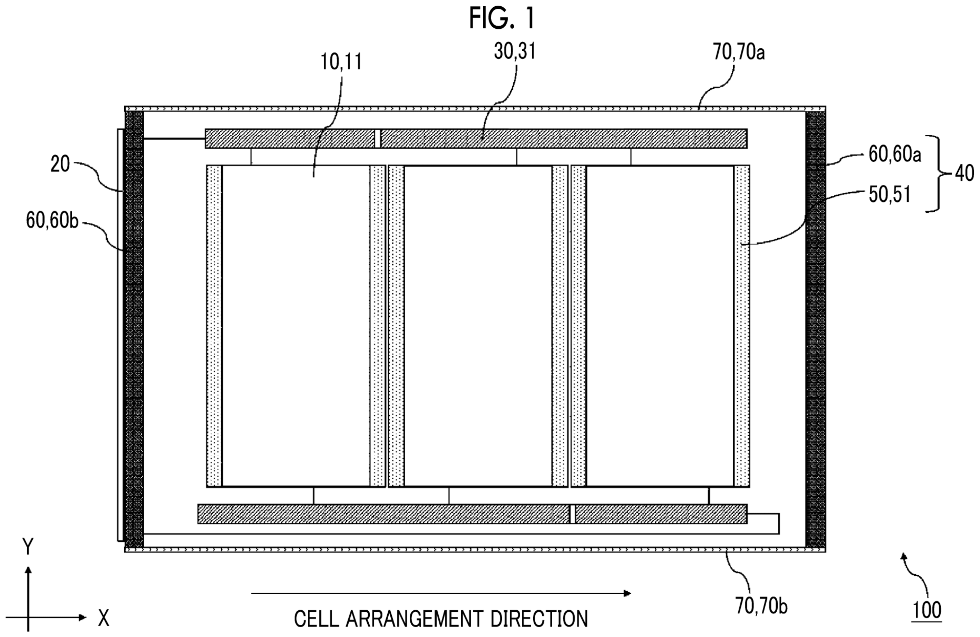

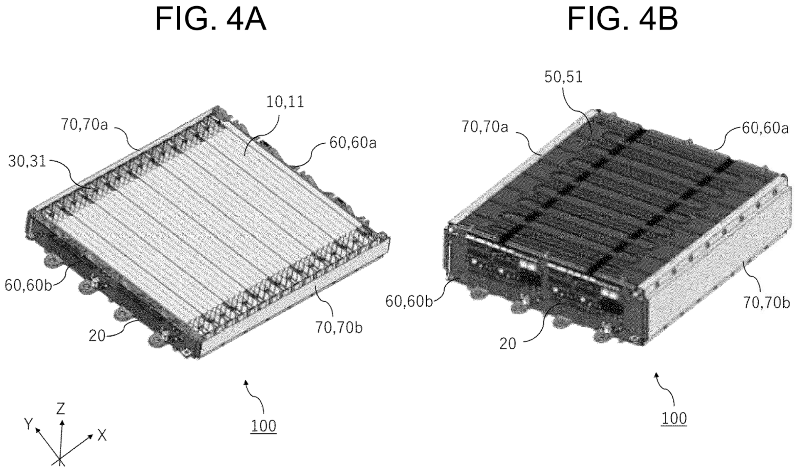

Fig. 1 and Figs. 4A and 4B are a cross-sectional view and perspective views, respectively, schematically illustrating an example of the resin battery module (battery module 100) according to the present embodiment.

The battery module 100 of Fig. 1 and Figs. 4A and 4B includes a plurality of battery cells 10, a circuit board 20, a bus bar 31, a fire-resistant plate 50, an end plate 60, and a side plate 70.

In the battery module 100 according to the present embodiment, at least one of the fire-resistant plate 50 that is the protective plate 40 disposed on a side surface of the battery cell 10 and a pair of end plates 60 is formed of a cured product of a thermosetting resin composition.

In the present embodiment, the battery module 100 can be used for various uses and, for example, can be used for a vehicle such as an electric vehicle, a hybrid vehicle, or an electric two-wheeled vehicle or for an electric power facility used in home or a factory.

Hereinafter, each of configurations of the battery module 100 will be described.

### (Module Case: End Plate, Side Plate)

The battery module 100 includes a plurality of battery cells 10 that are accommodated in an accommodation space of a module case. The plurality of battery cells 10 in the module case has arrangement in which side surfaces having the maximum surface area among cell surfaces overlap each other are disposed in a cell arrangement direction (one direction) illustrated in Fig. 1.

The module case may have a substantially cuboid structure from the viewpoint of space saving when a plurality of battery modules 100 are placed. The plate assembly having a substantially cuboid structure may be formed as a plate assembly where at least two surfaces among the six surfaces are assembled with a plurality of plate members. Note that a plate member forming the module case does not need to be present on one surface or two surfaces among the six surfaces.

In addition, each of the plate members forming the plate assembly mainly has a plate-like structure but partially have a linked structure linked with another member.

The module case of Fig. 1 is assembled with a pair of end plates 60 and a pair of side plates 70, and is a plate assembly having a frame structure.

Specifically, a pair of end plates 60a and 60b are provided on side surfaces on both end sides of the plurality of battery cells 10 arranged in the cell arrangement direction. A pair of side plates 70a and 70b are coupled with the pair of end plates 60a and 60b to form a surrounding structure (the plate assembly having a frame structure) that accommodates the plurality of battery cells 10.

In the present specification, in the battery module 100 having a substantially cuboid structure, when the cell arrangement direction of the battery cells 10 is an X-axis direction, regarding the remaining two directions, it is assumed that a longitudinal direction of the battery module 100 is an Y direction and a transverse direction thereof is a Z direction. In this case, a placement surface of the end plate 60 is a Y-Z plane, and a placement surface of the side plate 70 is an X-Z plane.

In the present embodiment, at least either or preferably both of the pair of the end plates 60a and 60b are formed of the cured product of the thermosetting resin composition. The thermosetting resin composition will be described below in detail.

The pair of end plates 60a and 60b adjacent to the side surface side of the battery cell 10 is formed of the cured product of the thermosetting resin composition such that heat resistance is further improved as compared to a case where a thermoplastic resin plate is used. Therefore, a decrease in rigidity during heating can be suppressed. In addition, as compared to a case where the thermoplastic resin plate is used, the fire-resistant plate 50 is insoluble or infusible such that the fire spread prevention property can be improved.

On the other hand, as compared to a case where a metal plate is used, thermal insulation and insulating properties are improved, and a reduction in weight can be realized. In a battery pack where a plurality of battery modules 100 are mounted, a structure having excellent fire spread prevention can be realized.

In another form, the pair of end plates 60 only need to include the cured product of the thermosetting resin composition, and may include a material other than the thermosetting resin composition, for example, a member formed of a composite material of the cured product and a metal material.

### (Fire-resistant plate)

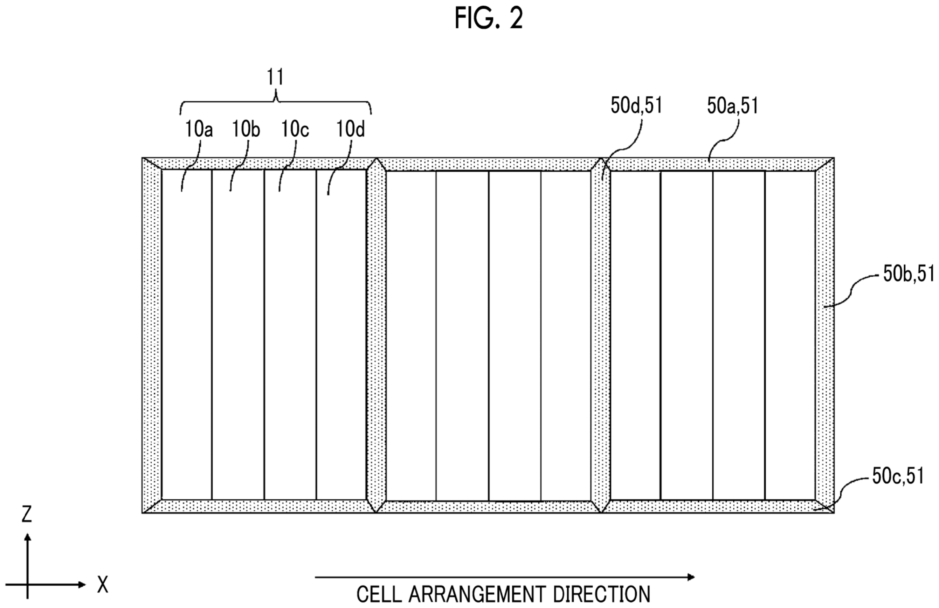

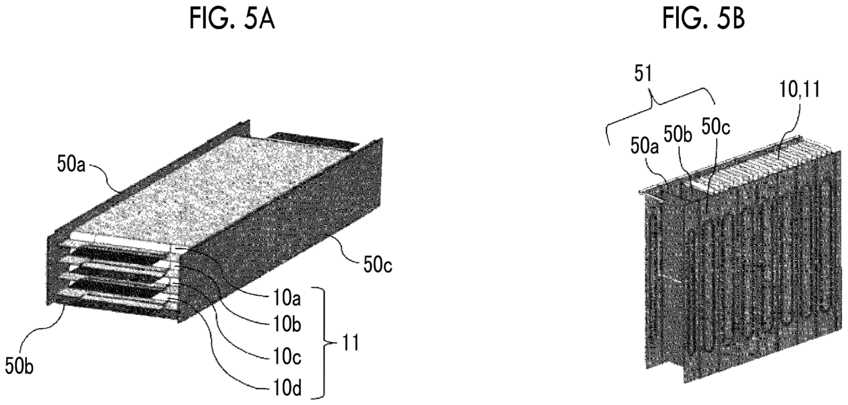

Fig. 2 and Figs. 5A and 5B are a cross-sectional view and perspective views, respectively, schematically illustrating an example of a stack structure of the plurality of battery cells according to the present embodiment.

The entire arrangement structure where the plurality of battery cells 10 are arranged in the cell arrangement direction in the battery module 100 will be referred to as a battery cell assembly 11. In the battery cell assembly 11, the fire-resistant plate 50 is disposed between at least one set of adjacent battery cells 10. That is, each of the battery cells 10 of the battery cell assembly 11 is accommodated in any of a plurality of accommodation spaces divided by the fire-resistant plate 50. By dividing the accommodation space, a fire spread prevention structure is improved.

The fire-resistant plate 50 can divide the accommodation space in the X-Z direction by dividing the accommodation space in the Y-Z direction of the battery cells 10 and covering at least one of upper and lower surfaces of the X-Z plane of the battery cells 10. This way, by assembling a plurality of fire-resistant plates 50, a fire-resistant case 51 including an accommodation space for accommodating at least one battery cell 10 can be formed.

Specifically, the fire-resistant case 51 includes each of the battery cells 10 or a structure that surrounds the periphery of the plurality of battery cells 10. The fire-resistant case 51 only needs to surround two surfaces, three surfaces, or four surfaces among surfaces where a battery cell terminal of the battery cell 10 is not formed.

The fire-resistant case 51 of Fig. 2 is formed with, for example, fire-resistant plates 50a, 50b, 50c, and 50d. Note that the fire-resistant plates 50a, 50b, 50c, and 50d may be formed of separate members that can be assembled, but at least a part thereof may be formed of the same member. The fire-resistant case 51 formed of the same member is a molded product having various structures such as a bend structure by collectively molding the fire-resistant plates with a predetermined molding method using a molding material. For example, in the description using the example of Fig. 5A, the fire-resistant plates 50a, 50b, and 50c may be collectively molded to form one molded product having a U-shaped structure.

In the fire-resistant case 51 illustrated in Fig. 5A, the fire-resistant plates 50a, 50b, and 50c are formed of a member A having a U-shaped structure. In this case, a plurality of fire-resistant cases 51 are linkable to each other, and may be in a state where the fire-resistant cases 51 are linked in the cell arrangement direction. In the structure where the plurality of fire-resistant cases 51 are linked, as illustrated in Fig. 5B, the fire-resistant plate 50b present between accommodation spaces adjacent to each other may be shared. The plurality of linked fire-resistant cases 51 of Fig. 2 has a structure surrounding four surfaces of a Y-Z plane and an X-Y plane in the battery cell 10.

In addition, in another form, by disposing two plate-like fire-resistant plates 50a and 50c having a large area to face each other and separating a space therebetween with the plurality of fire-resistant plates 50b and 50d, a plurality of accommodation spaces may be formed in the fire-resistant case 51. Alternatively, the fire-resistant case 51 may further include the fire-resistant plate 50d forming a plate-like member B that is attachable to the member A.

In addition, the thickness of the fire-resistant plate 50 is, for example, 0.1 mm to 3.0 mm, preferably 0.5 mm to 2.5 mm, and more preferably 1.0 mm to 2.0 mm. In the above-described range, a balance between a reduction in thickness and weight and fire spread prevention ability can be achieved.

In the accommodation space of the fire-resistant case 51, at least one battery cell 10 only need to be accommodated, and a stack including two or more battery cells 10, that is, the battery cell assembly 11 may be accommodated from the viewpoint of a balance between space saving and the fire spread prevention structure.

In addition, various sensors such as a temperature sensor may be placed on the outermost layer of the fire-resistant case 51 in the cell arrangement direction. For example, the temperature sensor is connected to the circuit board 20 placed on a surface of the end plate 60b through an interconnect. As a result, the temperature management of the battery cell 10 in the fire-resistant plate 50 can be performed.

In addition, in the present embodiment, the fire-resistant plate 50 is formed of the cured product of the thermosetting resin composition. The thermosetting resin composition will be described below in detail.

The fire-resistant plate 50 disposed between the plurality of battery cells 10 is formed of the cured product of the thermosetting resin composition such that heat resistance is further improved as compared to a case where a thermoplastic resin plate is used. Therefore, a decrease in rigidity during heating can be suppressed. In addition, as compared to a case where the thermoplastic resin plate is used, the fire-resistant plate 50 is insoluble or infusible such that the fire spread prevention property can be improved.

On the other hand, as compared to a case where a metal plate is used, thermal insulation and insulating properties are improved, and a reduction in weight can be realized. In a battery pack where a plurality of battery modules 100 are mounted, a structure having excellent fire spread prevention can be realized.

### ((Thermosetting Resin Composition))

The thermosetting resin composition is not particularly limited as long as it includes a thermosetting resin. For example, it is preferable that the thermosetting resin composition includes at least one of a phenol resin, unsaturated polyester, a diallylphthalate resin, and an epoxy resin. In particular, from the viewpoint of heat resistance, a thermosetting resin composition including at least a phenol resin is used.

Examples of the thermosetting resin composition include the cured product of the thermosetting resin and an inorganic filler.

When a phenol resin is used, hexamethylenetetramine can be used as a curing agent. In addition, when any one of unsaturated polyester and a diallylphthalate resin is used, an organic peroxide such as dicumyl peroxide can be used as a curing agent. In addition, when an epoxy resin is used, an amine compound, an anhydride, a phenol resin, an imidazole compound, or the like can be used as a curing agent.

The inorganic filler may include at least either or both of a short-fiber filler and a long-fiber filler.

As a fibrous filler used as the short-fiber filler and the long-fiber filler, glass fibers, wollastonite fibers, carbon fibers, plastic fibers, or the like can be used. As the plastic fibers, for example, aramid fibers (aromatic polyamide) are used. In addition, as the fibrous filler, inorganic fibers such as basalt fibers or metal fibers such as stainless steel fibers can also be used. In particular, from the viewpoints that a mechanical strength as a molded product can be improved, and a reduction in weight as a molded product can be realized, it is preferable that the fibrous filler is selected from the group consisting of glass fibers, wollastonite fibers, and carbon fibers.

The thermosetting resin composition is not limited to the inorganic fiber filler, and may include a filler other than fibers. As the filler, an inorganic filler or an organic filler can be used. As the inorganic filler, a spherical inorganic filler may be used. For example, glass beads, glass powder, calcium carbonate, silica, or aluminum hydroxide, or clay can be used.

The thermosetting resin composition may include various additives used for a typical molding material as necessary, for example, a mold release agent such as stearic acid, calcium stearate, or polyethylene, an auxiliary curing agent such as magnesium oxide, calcium hydroxide, or triphenylphosphine, a colorant such as carbon black, an adhesion improver for improving adhesion between the filler and the thermosetting resin, a coupling agent, a solvent, or a flame retardant.

As the method of manufacturing the thermosetting resin composition, for example, a method of mixing the raw material components by melting and kneading can be adopted. Specifically, the raw material components may be melted and kneaded using a kneading device alone such as a roller, a co-kneader, or a twin screw extruder or using a combination of the roller and another mixing device.

The manufacturing method is not limited to a melting and kneading method, and various well-known mixing methods can be adopted. For example, a method of impregnating and melting the thermosetting resin with continuous fibers and cutting the thermosetting resin into any length can be used. In addition, in this method, the thermosetting resin may include an organic filler and/or an inorganic filler.

The shape of the thermosetting resin composition can be, for example, a granular shape, a powder shape, a tablet shape, a sheet shape, a strip shape, or a pellet shape.

A molded product (the fire-resistant plate 50, the end plate 60, or the side plate 70) can be manufactured with a molding method such as transfer molding, compression molding, or injection molding using the thermosetting resin composition and an appropriate mold.

### (Battery Cell)

The battery cell 10 is formed of a secondary battery obtained by accommodating, in an exterior body, a sheet stack where one or more positive electrode sheets and one or more negative electrode sheets are separated by a separator.

The battery cell 10 is a secondary battery having a structure of any one of a pouch type, a prismatic type, and a cylindrical type (can type).

The prismatic type or cylindrical type secondary battery is obtained by sealing a wound body of the sheet stack in a quadrangular prismatic or cylindrical container (exterior body). The pouch type secondary battery is obtained by sealing the sheet stack in a pouch (exterior body) that is in the stacked state without being wound. In particular, from the viewpoint of space saving of arrangement, the battery cell 10 is preferably any one of a pouch type and a prismatic type.

Examples of the secondary battery include a lithium secondary battery, a lithium polymer battery, a nickel-cadmium battery, a nickel-metal hydride battery, and a nickel-zinc battery. In particular, it is preferable to use a secondary battery including at least one of lithium and nickel. In an example of the lithium secondary battery, a positive electrode may include a lithium-based oxide, and a negative electrode may include a carbon material.

Each of the plurality of battery cells 10 includes battery cell terminals (not illustrated) of a positive electrode lead and a negative electrode lead.

The pouch type battery cell 10 has a structure where a tab-shaped positive electrode lead (positive electrode tab) and a tab-shaped negative electrode lead (negative electrode tab) are drawn to the outside of the exterior body. As an example of the pouch type battery cell 10, a bidirectional drawing-type battery cell where a positive electrode lead and a negative electrode lead are drawn in opposite directions to one end side and another end side in a cell longitudinal direction may be used.

### (Bus Bar)

The bus bar 31 is electrically connected to a battery cell terminal of each of the plurality of battery cells 10. As an electrical connection method between the battery cell terminal and the bus bar 31, a well-known method can be adopted. For example, a method such as a welding method or a pressure welding method of bonding the battery cell terminal to the bus bar 31 can be used.

In addition, in order to electrically connect the plurality of battery cells 10 in parallel, battery cell terminals having the same polarity are connected to each other. In order to electrically connect the plurality of battery cells 10 in series, battery cell terminals having different polarities are connected to each other.

The bus bar 31 may be formed of a metal material having high electrical conductivity. Examples of the metal material include copper, aluminum, nickel, gold, and an alloy of two or more thereof.

The bus bar 31 may be formed of one member or may be formed of a plurality of members.

In addition, each of the positive electrode lead and the negative electrode lead in the battery cell 10 may be formed of the same material as that of the portion of the bus bar 31 to be connected. The positive electrode lead and the negative electrode lead may be formed of the same material but may be formed of different materials. For example, as the different materials, a positive electrode lead formed of aluminum and a negative electrode lead formed of copper may be adopted.

An interconnect portion of the bus bar 31 is accommodated in the module case together with the plurality of battery cells 10. An end portion (terminal portion) of the bus bar 31 is exposed to the outside through the end plate 60b and is electrically connected to the circuit board 20.

### (Circuit Board)

The circuit board 20 has a structure for electrically connection to the bus bar 31, and is connectable to the plurality of battery cells 1 through the bus bar 31. The circuit board 20 may include a circuit (BMS circuit) or the like that detects or controls voltages or currents of the plurality of battery cells 10 or detects or controls a temperature or the like of a temperature control pipe or a temperature control medium in a temperature control pipe for the temperature control of the battery cells 10.

The circuit board 20 only needs to be provided outside the module case and, in Fig. 4, is placed on an outer surface of the end plate 60a.

### (Connector with Temperature Control Function)

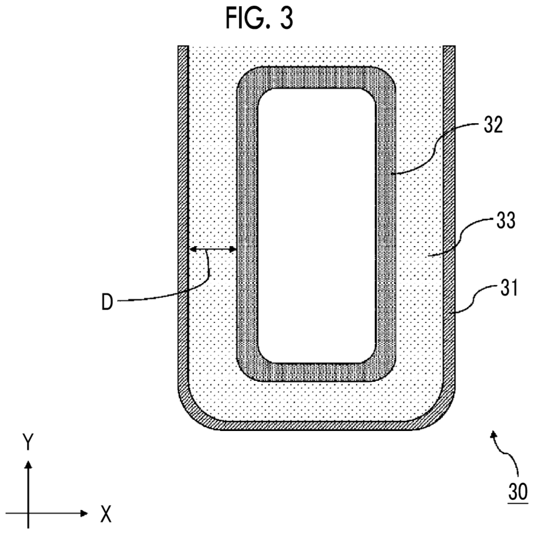

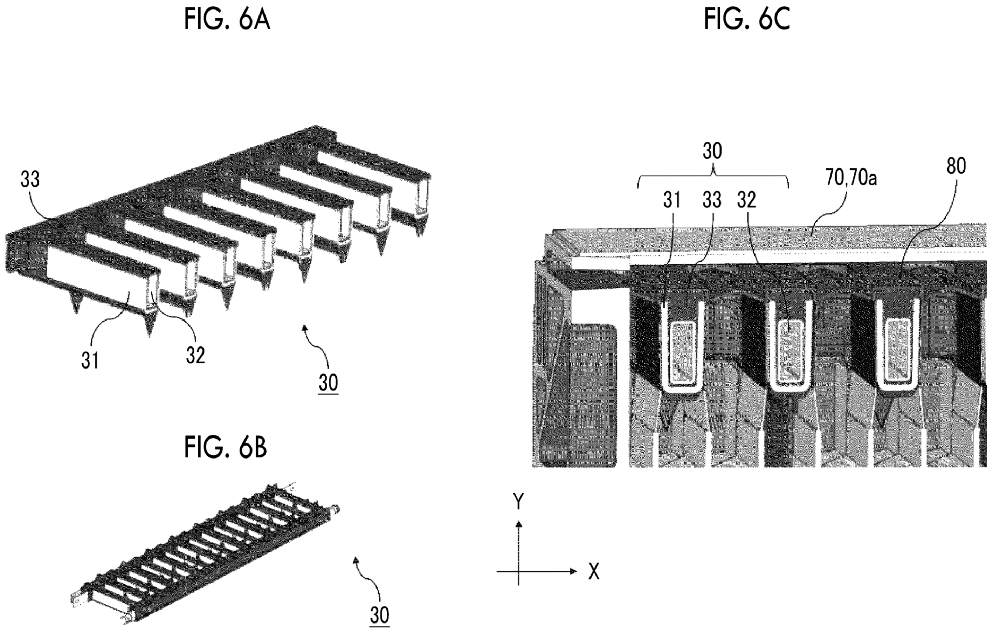

Fig. 3 and Figs. 6A to 6C are a cross-sectional view and perspective views, respectively, schematically illustrating an example of a connector with a temperature control function including the bus bar according to the present embodiment.

The connector 30 with a temperature control function has a temperature control function for the bus bar 31. The temperature control function is not particularly limited as long as a well-known temperature control method is adopted. That is, the connector 30 with a temperature control function enables not only cooling for controlling the temperature of the battery cell 10 not to excessively high but also heating the battery cell 10 at the time of cold start in a cold region (for example, enables heating the battery cell 10 to 0°C or higher at the start of using the battery module 100 in a low temperature environment of -10°C) .

As illustrated in Fig. 3, the connector 30 with a temperature control function includes the bus bar 31, a temperature control pipe 32 that performs the temperature control of the bus bar 31, and a resin sealing member 33 that includes at least a filling portion filled between the bus bar 31 and the temperature control pipe 32.

The temperature control pipe 32 has a tube structure for allowing a well-known temperature control medium to pass through the inside.

As the temperature control medium, for example, a liquid or a gas is used. A cooling medium only needs to have a temperature lower than the surface temperature of the battery cell 10. For example, cold water or cold wind can be used. In addition, a heating medium only needs to have a temperature higher than an external environment temperature. For example, hot water or hot wind can be used.

An inlet and an outlet of the temperature control pipe 32 may be exposed to the outside of the module case such that the temperature control medium is supplied from the outside and discharged to the outside.

As a material for forming the temperature control pipe 32, a material having high thermal conductivity can be adopted. From the viewpoint of workability, one or more metal materials may be used. For example, aluminum or an aluminum alloy can be used.

The bus bar 31 in the connector 30 with a temperature control function, for example, may have a structure along the surface shape of the temperature control pipe 32 or may have a substantially U-shaped structure having a cross-sectional structure of Fig. 3. A cross-sectional shape of the bus bar 31 is not limited to a substantially U-shaped structure, and may have a bend structure having curvature and/or bending. As a result, the cross-sectional shape is a structure capable of efficiently performing the temperature control of the bus bar 31.

As illustrated in Fig. 3, a gap portion between the bus bar 31 and the temperature control pipe 32 is filled with the resin sealing member 33. As a result, as compared to air, the thermal conductivity in the gap portion is improved, and the temperature controllability by the temperature control pipe 32 is improved.

In addition, the insulating properties between the bus bar 31 and the temperature control pipe 32 is improved, and application of a current of the bus bar 31 to the temperature control pipe 32 can be suppressed.

In Fig. 3, when a minimum width of the gap portion between the bus bar 31 and the temperature control pipe 32 is represented by D (µm), D may be, for example, 100 or more and 300 or less. By narrowing the gap portion, a structure having excellent heat dissipation can be adopted.

### ((Epoxy Resin Composition))

The resin sealing member 33 is formed of a cured product of an epoxy resin composition. As a result, the resin sealing member 33 having excellent heat dissipation and insulating properties can be realized.

The epoxy resin composition is not particularly limited as long as it is a resin composition including an epoxy resin, and may be solid or liquid depending on the use. The solid epoxy composition can be used as a molding material used for molding such as transfer molding. The liquid epoxy resin composition can be used as a casting material used for casting, coating, impregnation, or the like.

An example of the epoxy resin composition includes an epoxy resin, an inorganic filler, and a curing agent for the epoxy resin.

As the epoxy resin, a well-known resin can be used, and examples thereof include bisphenol-type epoxy resins such as a bisphenol A-type epoxy resin, a bisphenol F-type epoxy resin, and a tetramethylbisphenol F-type epoxy resin, crystalline epoxy resins such as a biphenyl-type epoxy resin, a stilbene-type epoxy resin, and a hydroquinone-type epoxy resin; novolac-type epoxy resins such as a cresol novolac-type epoxy resin, a phenol novolac-type epoxy resin, and a naphthol novolac-type epoxy resin; phenol aralkyl-type epoxy resins such as a phenylene skeleton-containing phenol aralkyl-type epoxy resin, a biphenylene skeleton-containing phenol aralkyl-type epoxy resin, a phenylene skeleton-containing naphthol aralkyl-type epoxy resin, and an alkoxynaphthalene skeleton-containing phenol aralkyl epoxy resin; trifunctional epoxy resins such as a triphenolmethane-type epoxy resin and an alkyl-modified triphenolmethane-type epoxy resin; modified phenol-type epoxy resins such as a dicyclopentadiene-modified phenol-type epoxy resin and a terpene-modified phenol-type epoxy resin; and heterocyclic ring-containing epoxy resins such as a triazine nucleus-containing epoxy resin. These epoxy resins may be used alone or in combination of two or more kinds.

From the viewpoint of mechanical strength, the inorganic filler may include one or two or more selected from the group consisting of silica, aluminum hydroxide, magnesium hydroxide, alumina, boron nitride, aluminum nitride, and magnesium oxide. In addition, from the viewpoint thermal conductivity, the inorganic filler may include a filler having a high thermal conductivity of 10 W/m·K or higher.

As the curing agent for the epoxy resin, a well-known curing agent can be used. For example, a phenol resin curing agent can be used. Examples of the phenol resin-based curing agents include novolac-type phenol resins such as a phenol novolac resin, a cresol novolac resin, a bisphenol novolac resin, and a phenol-biphenyl novolac resin; polyvinyl phenol; polyfunctional phenol resins such as a triphenolmethane-type phenol resin; modified phenol resins such as a terpene-modified phenol resin and a dicyclopentadiene-modified phenol resin; phenol aralkyl-type phenol resins such as a phenol aralkyl resin containing a phenylene skeleton and/or a biphenylene skeleton, and a naphthol aralkyl resin containing a phenylene and/or a biphenylene skeleton; and bisphenol compounds such as bisphenol A and bisphenol F.

The epoxy resin composition may include other components as necessary, in addition to the above-described components. Examples of the other components include a curing accelerator, a coupling agent, a fluidity imparting agent, a mold release agent, an ion scavenger, a colorant, and a flame retardant. The other components may be used alone or in combination of two or more kinds.

Here, Fig. 6A is a perspective cross-sectional view illustrating the connector 30 with a temperature control function when seen from the side plate 70a side of Fig. 3A, and Fig. 6B is a perspective view illustrating the connector 30 with a temperature control function when seen from the battery cell 10 side.

As illustrated in Figs. 6A and 6B, the resin sealing member 33 may include a bus bar cover portion that covers a surface (surface adjacent to the battery cell 10) of the bus bar 31 other than a surface to which the lead electrode is bonded, or may include a temperature control pipe cover portion that covers the periphery of the temperature control pipe 32. This way, the resin sealing member 33 realizes a structure where the bus bar 31 and the temperature control pipe 32 are integrated into one member.

As necessary, the connector 30 with a temperature control function may include an insulating cover member that covers at least a part or the entire surface of the surface of the temperature control pipe 32 between the bus bar 31 and the temperature control pipe 32.

As the insulating cover member, a well-known material can be used. For example, insulating paper can be used.

The insulating cover member has a structure that is buried in the resin sealing member 33. As a result, the insulating properties of the resin sealing member 33 are further improved.

In another form, as illustrated in Fig. 6C, at least one (side plate 70a) of the pair of side plates may function as a cover plate that covers at least a part of the connector 30 with a temperature control function.

In addition, in another form, the battery module 100 may include a fire-resistant burst valve plate 80 that is disposed between the connector 30 with a temperature control function and the cover plate (side plate 70a). By including the fire-resistant burst valve plate 80, an escape route of gas is generated, and occurrence of explosion caused by gas accumulating in the battery module 100 can be suppressed. For example, an air circulation path may be formed between the side plate 70a and the fire-resistant burst valve plate 80. An inlet and an outlet of the air circulation path may be formed of a hole portion of the end plate 60.

In addition, in another form, at least one of the side plate 70a (including a case of functioning as the cover plate), the side plate 70b, and the fire-resistant burst valve plate 80 may be formed of a well-known material, but may be a member mainly formed of the cured product of the thermosetting resin composition a from the viewpoint of the fire spread prevention ability.

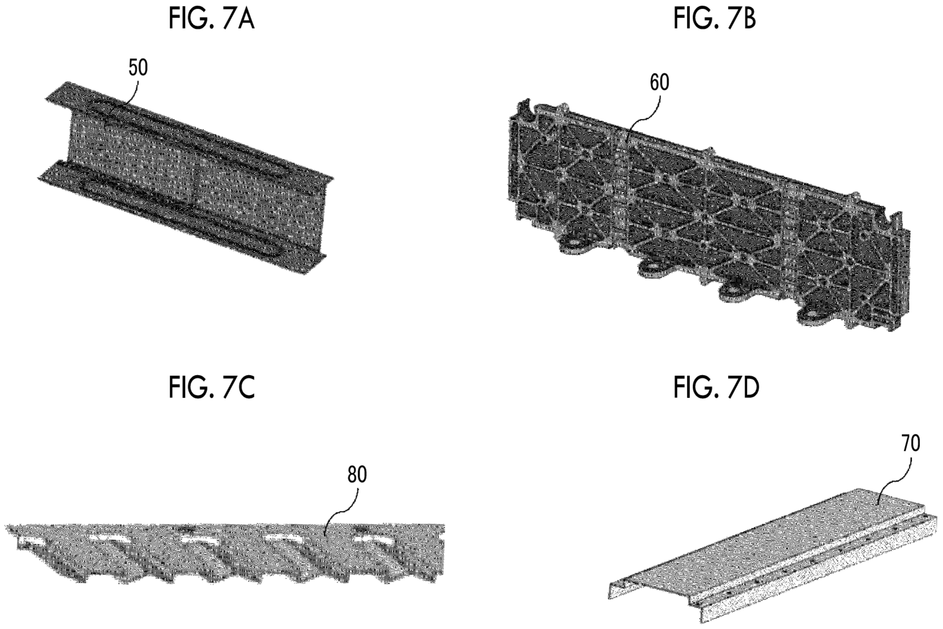

Figs. 7A to 7D illustrate an example of each of the components forming the battery module 100.

Hereinabove, the embodiment of the present invention has been described. However, the embodiment is an example of the present invention, and various configurations other than the above-described configuration can be adopted. In addition, the present invention is not limited to the above-described embodiment, and includes modifications, improvements, and the like within a range where the object of the present invention can be achieved.

The present application claims priority based on Japanese Patent Application No. 2022-212354 filed on December 28, 2022, the entire content of which is incorporated herein by reference.

### REFERENCE SIGNS LIST

100 battery module
10, 10a, 10b, 10c, 10d battery cell
11 battery cell assembly
20 circuit board
30 connector with a temperature control function
31 bus bar
32 temperature control pipe
33 resin sealing member
40 protective plate
50, 50a, 50b, 50c, 50d fire-resistant plate
51 fire-resistant case
60, 60a, 60b end plate
70, 70a, 70b side plate
80 fire-resistant burst valve plate

## Claims

1. A resin battery module comprising:
a plurality of pouch type or prismatic type battery cells including a battery cell terminal;
a circuit board;
a bus bar that is electrically connected to the battery cell terminal of each of the plurality of battery cells and the circuit board;
a fire-resistant plate that is disposed between at least one set of adjacent battery cells among a plurality of battery cells arranged in one direction;
a pair of end plates that are provided on both end sides of the plurality of battery cells arranged in one direction, respectively; and
a pair of side plates that are coupled with the pair of end plates to form a surrounding structure accommodating the plurality of battery cells,
wherein at least one of the fire-resistant plate and the pair of end plates is formed of a cured product of a thermosetting resin composition.

2. The resin battery module according to Claim 1, further comprising:
a fire-resistant case that forms an accommodation space accommodating at least one of the battery cells,
wherein the fire-resistant case is formed of one or a plurality of fire-resistant plates.

3. The resin battery module according to Claim 1 or 2,
wherein the thermosetting resin composition includes at least one of a phenol resin, unsaturated polyester, a diallylphthalate resin, and an epoxy resin.

4. The resin battery module according to any one of Claims 1 to 3, further comprising:
a connector with a temperature control function,
wherein the connector with a temperature control function includes
the bus bar,
a temperature control pipe that performs a temperature control of the bus bar, and
a resin sealing member that includes at least a filling portion filled between the bus bar and the temperature control pipe.

5. The resin battery module according to Claim 4,
wherein the resin sealing member is formed of a cured product of an epoxy resin composition.

6. The resin battery module according to Claim 4 or 5,
wherein at least one of the pair of side plates is a cover plate that covers at least a part of the connector with a temperature control function.

7. The resin battery module according to Claim 6, further comprising:
an explosion-proof valve plate that is disposed between the connector with a temperature control function and the cover plate.

8. The resin battery module according to Claim 7,
wherein at least one of the cover plate and the explosion-proof valve plate is formed of a cured product of a thermosetting resin composition.
